# EUROPEAN PATENT APPLICATION

(11) **EP 2 515 454 A1**
(43) Date of publication of application: **24.10.2012**
(21) Application number: 12164936.2
(22) Date of filing: 20.04.2012
(51) Int. Cl.: H04B 10/12

(54) **REMOTE ELECTRONIC COMPONENT, SUCH AS REMOTE RADIO HEAD, FOR A WIRELESS COMMUNICATION SYSTEM, REMOTE ELECTRONIC COMPONENT ARRAY AND EXTERNAL DISTRIBUTOR UNIT**

(30) Priority: 21.04.2011 DE 202011005511 U; 21.04.2011 US 201113091529
(71) Applicant: Tyco Electronics Nederland B.V., 5222 AR 's-Hertogenbosch (NL)
(72) Inventor: Hultermans, Antonius, 5032 CL Tilburg (NL); Tuin, Jacobus Nicolaas, 5684 HC Best (NL)
(74) Representative: Grünecker, Kinkeldey, Stockmair & Schwanhäusser

(57) **Abstract**

Remote electronic component for a wireless communication system, said remote electronic component (100) comprising:at least one optical input connector (102) for connecting said remote electronic component (100) with a control device via an optical data line (214), at least one optical output connector (104), at least one optical splitter/combiner unit (106) which is connected to the at least one input connector (102) for splitting an optical path into at least a first and a second optical paths (116, 118), wherein said first optical path (116) is connected to an internal circuitry communicating with an antenna (202), and said second optical path (118) is connected to an optical output connector (104) to be coupled to at least one second remote electronic component.

## Description

The present invention relates to a base transceiver station technology used in mobile communication systems, and more particularly to base transceiver station systems using remote radio head (RRH) technology.

A remote radio head, which is also called remote radio unit (RRU) and will also be referred to as remote radio device in the following, signifies an equipment used in wireless telecommunication systems. This type of equipment will be used in all wireless technologies like GSM (Global System for Mobile communication), CDMA (Code Division Multiple Access), UMTS (Universal Mobile Telecommunications System), and LTE (3GPP Long Term Evolution). As this radio equipment is remote from the cell site that facilitates wireless communication between a user equipment (UE) and a network, in particular a base transceiver station (BTS), NodeB, or eNodeB, it is called remote radio head. These equipments will be used to extend the coverage of a BTS/NodeB/eNodeB like rural areas or tunnels and are usually connected to a BTS/NodeB/eNodeB via a fiber optic cable using Common Public Radio Interface protocols.

In mobile communication systems, wireless access network is typically composed of base transceiver stations (BTS) and base station controllers (BSC) or radio network controllers (RNC) for controlling the BTSs. The BTS is mainly composed of a base band processing subsystem, a radio frequency (RF) subsystem and an antenna, etc. and is responsible for transmitting, receiving and processing wireless signals. A BTS can cover various cells by means of a plurality of antennas.

In mobile communication systems, there are wireless network coverage problems that are more difficult to solve with older BTS technologies, such as indoor coverage of high-rise buildings, coverage hole, or the coverage of shadow zones. The so-called RRH technology is a more effective solution. It was proposed to solve these problems. In BTS systems using RRH technology, the primary radio frequency units and antennas are installed in regions that are required to provide coverage, and are connected to other units in the BTS through wideband transmission lines.

The latest generations of wireless communication systems use RRH technology in a distributed base station architecture, where all radio related functions are included in a remote radio head which can be installed next to the antenna and which allows for greater distances between the RRH and antenna from a base station and the base band unit of the base station, reducing set up and operational costs.

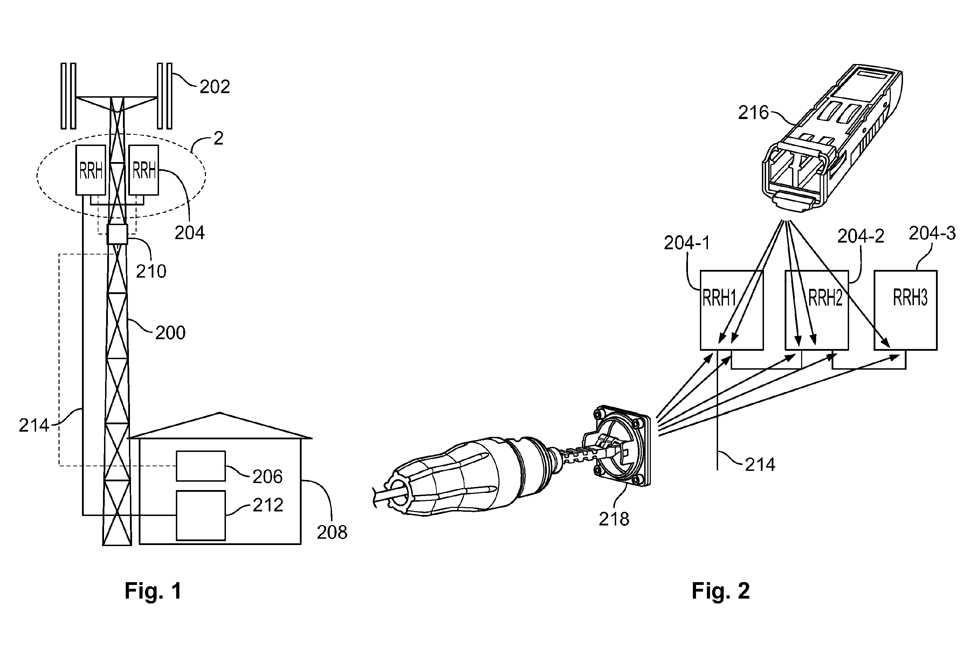

FIG. 1 shows a mobile radio system that uses modern RRH technology and that is installed on a tall building, tower or mast 200. On top of the mast 200 a plurality of antennas 202 are installed. In the immediate vicinity of the antennas 202 remote radio devices 204, which in the following will also be referred to as remote radio heads (RRH) or remote radio units (RRU), are installed. A power supply 206 for the system is installed, for instance, in a building 208 adjacent to the tower 200. A power distribution unit 210 near the remote radio devices 204 provides power to each of the remote radio devices 204. The broken lines symbolize the electric connections used for power supply.

The power line typically carries a 48 V current and the power distribution unit 210 may additionally be configured to contain a fuse box.

A control device 212 is also located within the building 208. This control device may, for instance, comprise a base transceiver station (BTS) device. As far as the signals are concerned, the base station 212 is connected to the RRH 204 via a data line 214. Typically, the data line 214 is an optical data cable for transmitting optical data in the uplink as well as in the downlink. Normally, on each mast 200 a plurality of antennas 202 and subsequently a plurality of remote radio devices 202 are provided.

Known systems mainly use two different approaches for connecting these remote radio devices 204 to the base station 212: Firstly, several concepts use a plurality of optical data lines 214, each leading from the base station 212 up to each single remote radio device in a star-shaped configuration. However, the cost of this cabling technique is high and, furthermore, the geometric restrictions for feeding such a voluminous cable harness are often forbidding this sort of interconnection.

Consequently, as shown in the detail of FIG. 2, a simple daisy chaining of remote radio devices 204 is often used. According to the embodiment shown in FIG. 2, a plurality of remote radio devices 204-1 to 204-3 are connected in a way that the first remote radio device 204-1 is connected with the data line 214 via a plug connection that feeds the optical signals into a optoelectronic transducer device 216 for converting them into electric signals.

The transducer device 216 is connected to an electric circuitry which feeds the antenna 202 in the uplink and receives signals from the antenna in the downlink. Signals which are received by the antenna assigned to the remote radio device 204 are processed by the internal circuitry, transformed into an optical signal and output via the connector 218.

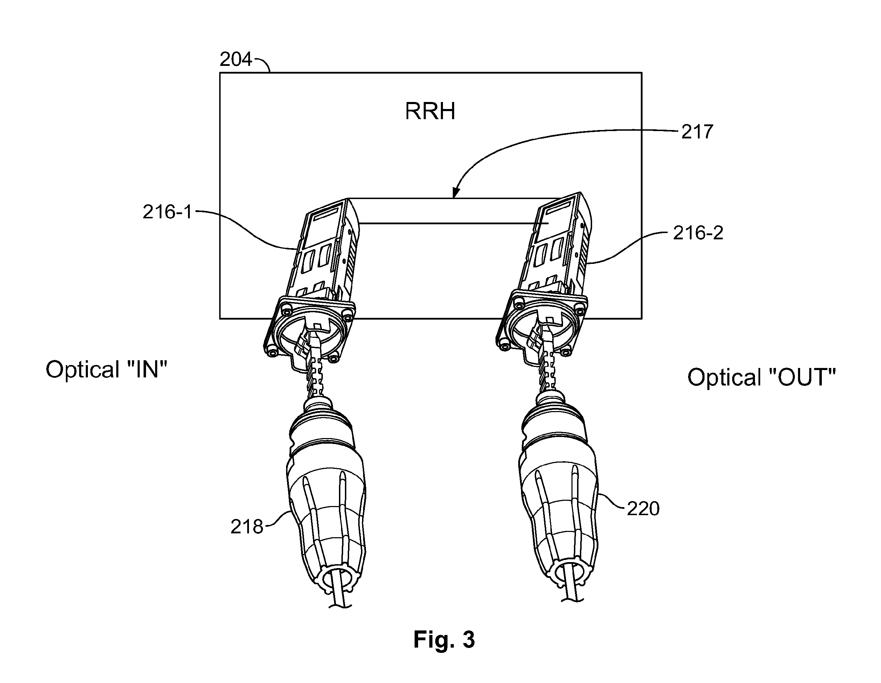

As may be additionally derived from FIG. 3, each of the conventionally interconnected remote radio devices 204-1 to 204-3 is formed in a way, that it has an optical input connector 218 and a second optical output connector 220, each combined with an optoelectronic transducer 216-1, 216-2. The transducers 216-1 and 216-2 may, for instance, be so-called small form factor plugs transceivers, SFP TxRx.

In the embodiment shown in FIGs. 1 to 3, an electric connection is established between the transducers 216-1 and 216-2 via an electrical high-speed interconnect 217, arranged, for instance, on a printed circuit board. Thus, a daisy chaining of the remote radio devices 204 may be achieved by connecting the optical input connector 218 either with the data line 214 from the control device or with the output of a previous remote radio device. The optical output connector 220 will then be used to connect one remote radio device 204 to the subsequent one.

This arrangement has the advantage that only one data line 214 has to be provided from the control device 212 to the tower top. However, this arrangement has a severe disadvantage in that the serial data path leading from one remote radio device to the next depends on a plurality of active transforming steps performed by optoelectronic transducers. In the arrangement shown in FIG. 2, five conversion steps from optical signals into electrical and back from electrical into optical signals are provided. Consequently, if one of the involved transducers 216 or even only the power supply of one of the remote radio devices 204-1 to 204-3 fails, the daisy chain is broken and all subsequent antennas are disconnected from the control device 212.

Consequently, there exists a need for a technique of interconnecting remote electronic components for wireless communication systems in a particularly fail-safe and nevertheless economic and simple way.

This object is solved by the subject matter of the independent claims. Advantageous embodiments are the subject matter of the dependent claims.

The present invention is based on the idea that by omitting the fault-prone active transformation steps from optical to electric signals and vice versa within the signal chain being passed on, a much more robust interconnection scheme can be provided. Such a passive optical interconnection may advantageously be implemented by using optical splitter/combiner units which are connected to an input connector of the remote electronic component for splitting the optical path into at least the first and second parallel optical path. In case of a failure of one particular remote electronic component within the chain, the signal is still relayed and only the function of the particular one defective remote electronic component is missing. Furthermore, as the number of active components within the whole chain is reduced, the failure rate as a whole is reduced.

According to an advantageous embodiment, the first optical path is connected to the internal circuitry via an optoelectronic transducer element, which converts the optical signal into an electric signal to be further processed by well-established electronic circuitry.

The splitter/combiner unit according to the present invention is formed by a passive optical device without the necessity of any electric power supply. Thus, within a serial connection of a plurality of remote electronic components, even in case of electric failure of one of them, the signal can still be passed on to the subsequent remote radio devices.

According to an advantageous embodiment of the present invention, the splitter/combiner unit comprises an optical splitter element that is operable to split an optical input signal into two or more split beams of a pre-defined intensity. This intensity can be equally distributed, each split beam having the same intensity, or can have different pre-defined percentages of power being tapped off from the incoming signal. It may, for instance, be desirable to pass on a higher percentage of optical power and only use a defined lower percentage of intensity for converting same into an electric output signal within a particular remote electronic component, because the remote electronic component may comprise amplifiers which are able to cope even with smaller signal intensities and still operate the antennas.

On the other hand, for passing on a signal in the opposite direction, the splitter/combiner unit comprises advantageously an optical combiner element that is operable to combine two or more input signals having a pre-defined intensity to form one combined beam having essentially the summated intensity.

The passive daisy chaining scheme according to the present invention may advantageously be employed for remote radio devices as explained above, but may also be used for other types of equipment on the mast, for instance, point-to-point microwave links. A point-to-point microwave link is a permanent connection between two sites that can be up to ten kilometres apart. This point-to-point microwave link normally works as a master-servant technology and is used for both voice and data traffic in a wireless manner.

According to an alternative embodiment of the passive interconnection scheme according to the present invention, a remote electronic component array may also be implemented by using an external distributor unit having an optical input connector for connecting the external distributor unit with a control device via an optical data line, and at least a first and a second optical output connector for connecting the external distributor unit with at least one first and second remote electronic component.

Consequently, the passive optical splitting is done in a separate unit which, however, is arranged on the tower top in the direct vicinity of, for instance, the first remote electronic component.

This solution has firstly the advantage that a plurality of remote electronic components can be interconnected in a particularly simple and cost saving way and without the problem that the failure of one component puts all subsequent components out of operation. On the other hand, this particular interconnecting scheme using an external distributor unit has the additional advantage that standard remote electronics components with only one optical connector can be used for setting up a complete array. Even existing assemblies can be retrofitted, when, for instance, an exchange of cabling is performed.

The accompanying drawings are incorporated into and form a part of the specification to illustrate several embodiments of the present invention. These drawings together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form— individually or in different combinations—solutions according to the present invention.

Further features and advantages will become apparent from the following more particular description of the various embodiments of the invention, as illustrated in the accompanying drawings, in which like references refer to like elements, and wherein:
- FIG. 1: shows part of a wireless communication system comprising a mast with antennas and remote electronic components;
- FIG. 2: shows a detail of FIG. 1;
- FIG. 3: shows a detail of FIG. 2;
- FIG. 4: shows a remote electronic component according to a first advantageous embodiment;
- FIG. 5: shows a schematic perspective view of a detail of the device according to FIG. 4;
- FIG. 6: shows a schematic diagram of a remote electronic component array according to an alternative embodiment of the present invention.

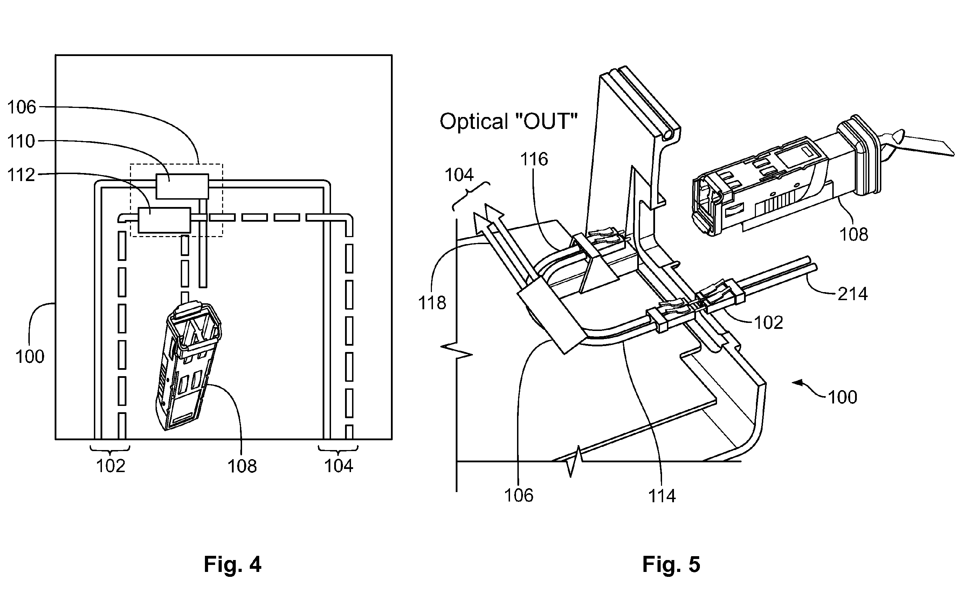

Turning now to FIG. 4, a first advantageous interconnection scheme for remote electronic components in wireless communication application environments is explained, which may be used to interconnect the remote radio devices shown in FIG. 1.

According to this first advantageous embodiment, a remote radio device 100 has an input connector 102 and an output connector 104. Each of the connectors connect fiber-optic cables transmitting signals into opposing directions (uplink and downlink). According to the present invention, an optical splitter/combiner unit 106 is provided that is configured to passively tap a part of the incoming optical signal to an active transducer 108 and pass on the remaining optical signal to the output connector 104, which can be connected to a subsequent remote radio device 100.

The optoelectronic transducer 108 performs a conversion between the optical and the electric signal layer and, in particular, provides the electric signals for the antenna and converts the signals received from the antenna into an optical signal.

In particular, the optical splitter/combiner unit 106 comprises an optical splitter element 110 and an optical combiner element 112. Both of these optical couplers are having a passive character, that is, they do not need electric power supply for performing their particular task.

Generally, all known passive fiber-optic coupler fabrication techniques can be used for implementing the optical splitter/combiner unit 106. Some fiber-optic coupler fabrication involves beam splitting using micro lenses or graded reflective index rods and beam splitters or optical mixers. The fabrication of these devices may, for instance, involve twisting, fusing and tapering together two or more optical fibers. Fused bi-conical tapered couplers, for instance, use radiative coupling of light from the input fiber to the output fibers in a tapered region to accomplish beam splitting.

Moreover, any advantageous power percentage between the radiation transmitted to the optoelectronic transducer 108 and the signal passed on to the next remote radio device 100 can be chosen. Normally, less than 50% of the intensity will be used within the particular remote radio device, and a higher percentage will be relayed to the subsequent remote radio devices. This, however, will of course depend on the particular application environment and mainly on the number of daisy-chained devices.

FIG. 5 shows in a perspective view a schematic drawing of the remote radio device 100 depicted in FIG. 4. The input connector 102 is adapted to couple the data line 214 optically and passively to a further internal input line 114. The internal input line 114 is for instance formed by two optical fibers which are conducting optical signals in two directions.

The inventive optical splitter/combiner unit 106 generates two optical paths: A first optical path 116 is coupled to an optoelectric transducer 108 and from there to internal electric circuitry. A second optical path 118 is connected to an optical output connector 104, thereby passing on passively the optical signal to a next remote electronic component 100.

The solution according to FIGs. 4 and 5 has the advantage of being particularly failsafe. However, it requires to develop dedicated remote electronic components, such as remote radio devices having internal optical splitter/combiner units and two optical connectors leading out of the watertight housing.

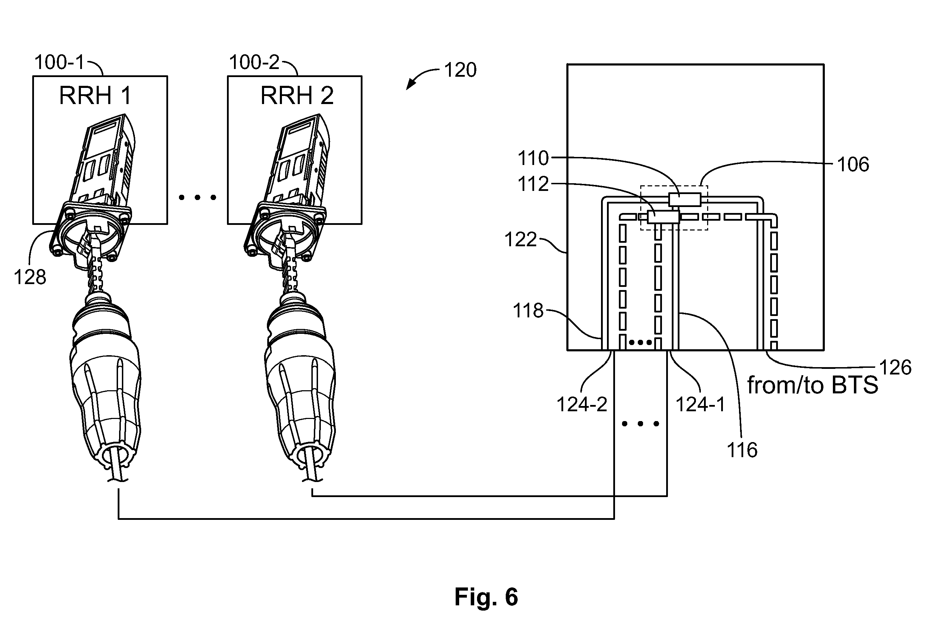

A more flexible and retro-fittable solution for interconnecting remote electronic components by means of passive optical interconnection is shown in FIG. 6. The array 120 of interconnected components according to this alternative embodiment comprises a plurality of remote electronic components 100-1, 100-2 and an external distributor unit 122.

According to this alternative embodiment, the remote electronic components 100-1 and 100-2 only have one optical connector each which is coupled to output connectors 124 of the external distributor unit 122. The external distributor unit 122 is connected to an optical data line coming for instance from a control device, such as a BTS, via an input connector 126.

In this alternative embodiment, the external distributor unit 122 is provided with the optical splitter/combiner unit 106 according to the present invention as explained with reference to Figures 4 and 5. The splitter/combiner unit 106 may be configured to comprise one optical splitter 110 and an optical combiner 112 corresponding to the embodiment shown in FIG. 4. However, also more than only two output connectors 124 for interconnecting more than the shown two remote radio devices 100-1 and 100-2 can be provided.

As the branching off of the different optical paths within the external distributor unit 122 is performed completely passive, the interconnection scheme according to the embodiment of Fig. 6 is particularly failsafe. Furthermore, a fault condition in one of the remote radio devices 100-1, 100-2 does not influence the functioning of the remaining unit(s).

In summary, by means of the inventive interconnection schemes a continued service can be received from all other remote electronic components, if one of them has a fault in power supply and/or one of its SFP transceiver units.

Although usually two, three or six remote radio devices are used, of course any other number, like four, five or more than six, can be interconnected using one of the schemes according to the present invention. An important aspect is always that the passed on signal stays optic and is relayed from one remote component to the next in a completely passive way. Thus, the independence from electric power supply can be achieved.

## Claims

1. Remote electronic component for a wireless communication system, said remote electronic component (100) comprising:
at least one optical input connector (102) for connecting said remote electronic component (100) with a control device via an optical data line (214),
at least one optical output connector (104),
at least one optical splitter/combiner unit (106) which is connected to the at least one input connector (102) for splitting an optical path into at least a first and a second optical paths (116, 118),
wherein said first optical path (116) is connected to an internal circuitry communicating with an antenna (202), and said second optical path (118) is connected to an optical output connector (104) to be coupled to at least one second remote electronic component.

2. Remote electronic component according to claim 1, wherein said first optical path (116) is connected to said internal circuitry via an optoelectronic transducer element (108).

3. Remote electronic component according to claim 1 or 2, wherein said splitter/combiner unit (106) is a passive optical device without an electric power supply.

4. Remote electronic component according to one of the preceding claims, wherein said splitter/combiner unit (106) comprises an optical splitter element (110) that is operable to split an optical input signal into split beams of a predefined intensity.

5. Remote electronic component according to one of the preceding claims, wherein said splitter/combiner unit (106) comprises an optical combiner element (112) that is operable to combine two input signals having a predefined intensity to form one combined beam having essentially the summated intensity.

6. Remote electronic component according to one of the preceding claims, wherein said electronic component (100) comprises a remote radio device or a point-to-point microwave link.

7. Remote electronic component array (120) comprising at least one first remote electronic component (100-1) and one second remote electronic component (100-2), said first remote electronic component (100-1) being configured according to one of the claims 1 to 6.

8. Remote electronic component array according to claim 7, wherein a plurality of first remote electronic components (100-1) are connected in series, the optical output terminal (104) of each remote electronic component (100-1) being connected to the optical input terminal (102) of a subsequent remote electronic component (100-2), the last of the first remote electronic components being connected with said second remote electronic component being configured as a termination remote radio unit.

9. Remote electronic component array (120) comprising at least one first remote electronic component (100-1) and one second remote electronic component (100-2), said array further comprising:
an external distributor unit (122) having an optical input connector (126) for connecting said external distributor unit (122) with a control device (212) via an optical data line (214), and at least a first and a second optical output connector (124) for connecting said external distributor unit (122) with said at least one first remote electronic component and one second remote electronic component,
wherein said external distributor unit (122) comprises at least one optical splitter/combiner unit (106) which is connected to the at least one input connector (126) for splitting an optical path into at least a first and a second parallel optical paths (116, 118), and
wherein said first optical path (116) is connected to said first output connector (124-1), and said second parallel optical path (118) is connected to said second optical output connector (124-2).

10. Remote electronic component array according to claim 9, wherein said external distributor unit (106) is mounted in the vicinity of the first remote electronic component (100-1).

11. Remote electronic component array according to claim 9 or 10, wherein said first and second remote electronic components (100-1, 100-2) are formed identically, comprising each an optical input connector (128) which is connected to one of the optical output connectors (124) of said external distributor unit (122).

12. Remote electronic component array according to one of the claims 9 to 11, wherein said electronic components (100-1, 100-2) comprise a remote radio device or a point-to-point microwave link.

13. External distributor unit for optically connecting a control device (212) with a plurality of remote electronic components (100-1, 100-2), said external distributor unit (122) comprising:
an optical input connector (126) for connecting said external distributor unit (122) with a control device (212) via an optical data line (214), and at least a first and a second optical output connector (124) for connecting said external distributor unit (122) with at least one first remote electronic component (100-1) and one second remote electronic component (100-2), and
at least one optical splitter/combiner unit (106) which is connected to the at least one input connector (126) for splitting an optical path into at least a first and a second parallel optical paths (116, 118),
wherein said first optical path (116) is connected to said first output connector (124-1), and said second parallel optical (118) path is connected to said second optical output connector (124-2).

14. External distributor unit according to claim 13, having a weatherproof housing and watertight connectors for being mounted in the vicinity of at least one of said plurality of remote electronic components (100-1, 100-2).

15. External distributor unit according to claim 13 or 14, wherein said optical splitter/combiner unit (106) is a passive optical device without an electric power supply.

16. External distributor unit according to one of the claims 13 to 15, wherein said splitter/combiner unit (122) comprises an optical splitter element (110) that is operable to split an optical input signal into split beams of a predefined intensity.

17. External distributor unit according to one of the claims 13 to 16, wherein said splitter/combiner unit (122) comprises an optical combiner element (112) that is operable to combine two input signals having a predefined intensity to form one combined beam having essentially the summated intensity.
